# EUROPEAN PATENT APPLICATION

(11) **EP 2 620 867 A2**
(43) Date of publication of application: **31.07.2013**
(21) Application number: 13153115.4
(22) Date of filing: 29.01.2013
(51) Int. Cl.: G06F 3/14, G09G 5/00, H04N 5/44

(54) **Display apparatus, upgrade apparatus, display system including the same and control method thereof**

(30) Priority: 30.01.2012 KR 20120008848
(71) Applicant: Samsung Electronics Co., Ltd., Gyeonggi-do 443-742 (KR)
(72) Inventor: Shin, Ki-oci, Suwon-si (KR); Lee, Tae-young, Suwon-si (KR); Cho, Soon-jae, Suwon-si (KR); Chon, Sei-hee, Suwon-si (KR); Hahm, Cheul-Hee, Seongnam-si (KR)
(74) Representative: Waddington, Richard

(57) **Abstract**

A display apparatus (100), an upgrade apparatus (200), a display system (1) including the same, and a control method thereof are provided, the display apparatus including: a first image processor (130) which processes an input image signal and outputs a first output signal; an upgrade apparatus connector (160) which is connectable to an upgrade apparatus including a second image processor (220); a display (170) which displays at least one of a first image corresponding to the first output signal and a second image corresponding to a second output signal output by the second image processor; a first storage (150) which stores first apparatus information about the upgrade apparatus; and a first controller (140) which sets the upgrade apparatus to a communication state based on the first apparatus information stored in the first storage if the upgrade apparatus is connected to the upgrade apparatus connector.

## Description

### CROSS-REFERENCE TO RELATED APPLICATION

This application claims priority from Korean Patent Application No. 10-2012-0008848, filed on January 30, 2012 in the Korean Intellectual Property Office, the disclosure of which is incorporated herein by reference.

### BACKGROUND

### 1. Field

Apparatuses and methods consistent with exemplary embodiments relate to a display apparatus, an upgrade apparatus, a display system including the same, and a control method thereof, and more particularly to a display apparatus which is capable of saving preparation time for communication between an upgrade apparatus and the display apparatus, an upgrade apparatus, a display system including the same, and a control method thereof.

### 2. Description of the Related Art

A display apparatus, such as a television (TV) or a monitor, is a device which receives image signals/image data from various external image sources and presents the signals/data on a display unit. For example, a TV processes broadcast signals transmitted from external sources according to various types of image processing, e.g., decoding and scaling, to display images of a user-desired broadcast channel on a display panel.

The display apparatus includes an embedded image processing board configured as a circuit including various kinds of chip sets, a memory, or the like to conduct image processing.

However, with technological developments and diverse demands of users, there is a growing demand for a display apparatus having upgraded capability and expanded functions.

If a user needs to purchase a display apparatus to utilize newly added or upgraded functions, it causes an economic burden. Therefore, there is a demand for a display apparatus which can be upgraded to easily add or expand new or advanced functions.

If it takes a long time to connect an upgrade apparatus, which upgrades hardware or software of the display apparatus, to the display apparatus to communicate with a user is put to inconvenience. Therefore, there is also a need to minimize the amount of time needed to connect and utilize an upgrade apparatus.

### SUMMARY

According to the present invention there is provided an apparatus and method as set forth in the appended claims. Other features of the invention will be apparent from the dependent claims, and the description which follows.

According to an aspect of an exemplary embodiment, there is provided a display apparatus including: an image signal input ; a first image processor which processes an image signal input to the image signal input and outputs a first output signal; an upgrade apparatus connector which is configured to connect to an upgrade apparatus including a second image processor; a display which displays at least one of a first image corresponding to the first output signal and a second image corresponding to a second output signal output by the second image processor; a first storage which stores first apparatus information about the upgrade apparatus therein; and a first controller which sets the upgrade apparatus to a communication state based on the first apparatus information stored in the first storage if the upgrade apparatus is connected to the upgrade apparatus connector.

The first controller may store second apparatus information about a new upgrade apparatus in the first storage if the new upgrade apparatus is connected to the upgrade apparatus connector.

The first controller may set the new upgrade apparatus to a communication state based on the second apparatus information stored in the first storage if the new upgrade apparatus is connected to the upgrade apparatus connector.

The first apparatus information may include at least one of information about a data transfer type of the upgrade apparatus, information about a version of the upgrade apparatus, and information about maximum packet size.

The upgrade apparatus connection connector may include a USB port, and the first controller may include a USB host controller which controls communications of the USB port.

According to another aspect of an exemplary embodiment, there is provided an upgrade apparatus including: a body connector which is configured to connect to a display apparatus including a first image processor and a first controller; a second image processor which receives and processes a signal output from the display apparatus through the body connector; a second storage which stores third apparatus information about the display apparatus therein; and a second controller which sets the display apparatus to a communication state based on the third apparatus information stored in the second storage if the display apparatus is connected to the body connection.

The second controller may store fourth apparatus information about a new display apparatus in the second storage if the new display apparatus is connected to the body connector.

The second controller may set the new display apparatus to a communication state based on the fourth apparatus information stored in the second storage if the new display apparatus is connected to the body connector.

The third apparatus information may include at least one of information about a data transfer type of the display apparatus, information about a version of the display apparatus, and information about maximum packet size.

The body connector may include a USB port, and the second controller may include a USB host controller which controls communications of the USB port.

According to another aspect of an exemplary embodiment, there is provided a display system including: a display apparatus including a first image processor which processes a first input image signal and outputs a first output signal, an upgrade apparatus connector, a display which displays a first image corresponding to the first output signal, a first storage , and a first controller; and an upgrade apparatus including a body connector which is connected to the upgrade apparatus connection connector, a second image processor which receives and processes a second input image signal, a second storage , and a second controller, and at least one of the first storage and the second storage stores apparatus information about at least one of the connected display apparatus and the upgrade apparatus, and at least one of the first controller and the second controller set the at least one of the connected display apparatus and the upgrade apparatus to a communication state based on the apparatus information stored in at least one of the first storage and the second storage.

At least one of the upgrade apparatus connector and the body connector may include a USB port, and at least one of the first controller and the second controller may include a USB host controller which controls communications of the USB port.

According to another aspect of an exemplary embodiment, there is provided a control method of a display system including a display apparatus and an upgrade apparatus connected to the display apparatus, the method including: detecting that the upgrade apparatus and the display apparatus are connected to each other; reading out apparatus information about at least one of the upgrade apparatus and the display apparatus from a first storage of the display apparatus or a second storage of the upgrade apparatus; and setting the at least one of the upgrade apparatus and the display apparatus to a communication state based on the apparatus information.

The control method may further include storing changed apparatus information in the first storage or the second storage if the apparatus information about the at least one of the upgrade apparatus and the display apparatus is changed.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a perspective view showing a rear side of a display system according to an exemplary embodiment;

FIG. 2 is a block diagram of the display system of FIG. 1 according to an exemplary embodiment; and

FIG. 3 is a flowchart illustrating a control method of the display system according to an aspect of an exemplary embodiment;

### DETAILED DESCRIPTION OF EXEMPLARY EMBODIMENTS

Below, exemplary embodiments will be described in detail with reference to accompanying drawings so as to be easily realized by a person having ordinary skill in the art. The exemplary embodiments may be embodied in various forms without being limited to the exemplary embodiments set forth herein. Descriptions of well-known parts are omitted for clarity and conciseness, and like reference numerals refer to like elements throughout. Throughout the description, a "unit" may be used interchangeably with a "component" or "module."

Hereinafter, a display apparatus, an upgrade apparatus, a display system including the same, and a control method thereof according to an exemplary embodiment will be described with reference to the drawings.

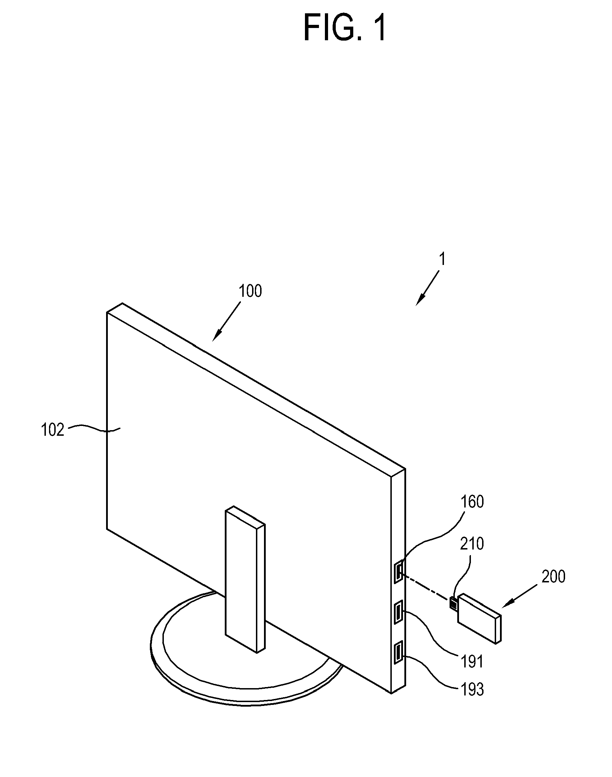

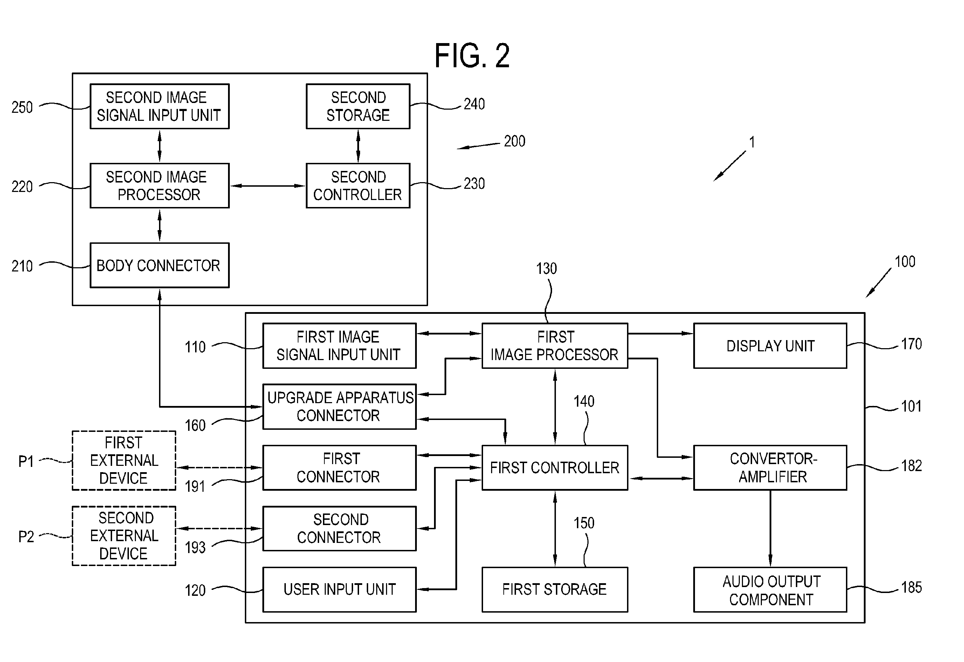

As shown in FIGs. 1 and 2, a display system 1 according to an exemplary embodiment includes a display apparatus 100 processing an image signal provided from an external image source (not shown) according to a preset image processing procedure and displaying an image based on the image signal. The display system 1 also includes an upgrade apparatus 200 upgrading hardware and/or software of the display apparatus 100.

In the system 1 of the exemplary embodiment, the display apparatus 100 is configured as a TV which displays broadcast images based on broadcast signals/broadcast information/broadcast data received from a transmitter of a broadcasting station. However, a TV is merely an illustrative example, and the display apparatus 100 may be one of various devices which are capable of processing images or processing and displaying images. For example, the display apparatus 100 may be s an image processing apparatus which performs an image processing function only without a display unit, such as a set-top box.

Any image may be displayed by the display apparatus 100, without being limited to broadcast images. For example, the display apparatus 100 may display images, such as videos based on signals/data received from various types of image sources (not shown), still images, applications, on-screen display (OSD), and graphic user interface (GUI) for controlling various operations.

The upgrade apparatus 200 is connected to and communicates with the display apparatus 100. The upgrade apparatus 200 upgrades existing hardware and/or software of the connected display apparatus 100 and enables an image signal to be processed by the upgraded hardware and/or software of the display apparatus 100, thereby displaying an image with improved quality and/or providing more functions to the user.

As shown in FIG. 2, the display apparatus 100 includes a first image signal input unit 110 receiving an image signal, a first image processor 130 processing the image signal input by the first image signal input unit and outputting a first output signal, an upgrade apparatus connection unit 160 to which the upgrade apparatus 200 including a second image processor 220 is connected, a display unit 170 displaying at least one of a first image corresponding to the first output signal and a second image corresponding to a second output signal processed by the second image processor 220 of the upgrade apparatus 200, a first storage unit 150 storing first apparatus information about the upgrade apparatus 200, a first controller 140 setting the upgrade apparatus 200 to a communication state, and a casing 102 accommodating the display unit 170.

The first image signal input unit 110 transmits an image signal and/or a broadcast signal received from at least one image source to the first image processor 130. The first image signal input unit 110 may include a tuner to receive the broadcast signal.

An image signal received through the first image signal input unit 110 may have various standards corresponding to an image source and a display mode of the display unit 170. For example, the first image signal input unit 110 may receive signals/data in accordance with the high definition multimedia interface (HDMI), USB, and component standards and include a plurality of connection terminals (not shown) corresponding to the respective standards. Various external devices including an image source are connected to the connection terminals, and thus an image signal may be received through the first image signal input unit 110.

When the upgrade apparatus 200 is connected to the upgrade apparatus connection unit 160, the first image signal input unit 110 transmits an input image signal to the upgrade apparatus connection unit 160, not to the first image processor 130, according to control by the first controller 140. That is, the first image signal input unit 110 may include a plurality of output ports receiving and outputting the input signal to transmit the input signal selectively to the upgrade apparatus 200 or the first image processor 130 according to the control of the controller 140. The first image signal input unit 110 may provide the input signal only to the first image processor 130 as well.

The first image processor 130 may include a demultiplexer (not shown) which performs demultiplexing, i.e., separating a broadcast signal received from the first image signal input unit 110 into an image signal, an audio signal, and optional data, a decoder (not shown) decoding the separate image signal in a predetermined image format, and a scaler (not shown) scaling the decoded image signal in a predetermined resolution and displaying an image based on the image signal on the display unit 170.

Further, the first image processor 130 performs various preset image processing procedures on an image signal received from the first image signal input unit 110. The first image processor 130 outputs a processed image signal to the display panel 170, so that an image based on the image signal is displayed on the display panel 170.

The first image processor 130 may perform any type of image processing, without being limited to, for example, demultiplexing to separate a signal into characteristic signals, decoding corresponding to an image format of an image signal, de-interlacing to convert an interlaced image signal into a progressive form, scaling to adjust an image signal to a preset resolution, noise reduction to improve image quality, detail enhancement, frame refresh rate conversion, or the like.

The first image processor 130 may be provided as an image processing board (not shown) in which a circuit system may conduct such processes, and may include components such as various chip sets (not shown), a memory (not shown), electronic components (not shown), and wiring (not shown), which are mounted on a printed circuit board (PCB, not shown).

The upgrade apparatus connection unit 160 is provided to be connected to a body connection unit 210 of the upgrade apparatus 200 so that the display apparatus 100 and the upgrade apparatus 200 communicate using at least one of data, signals, information, and power with each other.

The upgrade apparatus connection unit 160 may have a predetermined number of ground terminals to stably transmit and receive the data/signals/information/power.

The upgrade apparatus connection unit 160 may be disposed in the casing 102 to be exposed to the outside.

As shown in FIG. 1, the upgrade apparatus connection unit 160 may be formed on a lateral side of the casing 102. Defining a side on which a screen of the display unit 170 is disposed as a front side and the opposite side as a rear side, the upgrade apparatus connection unit 160 may be formed on the rear side to be exposed to the outside if necessary. As needed, a cap (not shown) may be installed in the upgrade apparatus connection unit 160 to cover the upgrade apparatus connection unit 160, exposed to the outside when the upgrade apparatus 200 is not inserted into the upgrade apparatus connection unit 160. Accordingly, foreign materials, such as dust, are prevented from flowing into the casing 102 before the upgrade apparatus 200 is mounted.

The upgrade apparatus connection unit 160 may transmit at least one of the input signal input through the first image signal input unit 110 and the first output signal which is output by the first image processor 130 to the body connection unit 210.

Here, the first output signal may include at least one of a first image signal and a first audio signal.

The upgrade apparatus connection unit 160 may be provided as a connection port in accordance with general standards, such as high definition multimedia interface (HDMI), universal serial bus (USB), component, digital visual interface (DVI), and IEEE 1394 ports. As necessary, the upgrade apparatus connection unit 160 may be provided to communicate data/signals/information/power according to a low voltage differential signaling (LVDS) standard.

The upgrade apparatus connection unit 160 may be provided in various types and forms, without being limited to the foregoing examples, as long as it is configured to enable the display apparatus 100 and the upgrade apparatus 200 to communicate at least one of data, signals, information, and power with each other.

The upgrade apparatus 200 may include the body connection unit 210 connected to the upgrade apparatus connection unit 160 of the display apparatus 100 to enable data communication, the second image processor 220 processing an image signal transmitted from the display apparatus 100 through the body connection unit 210, and a second controller 230 controlling the second image processor 220.

The upgrade apparatus connection unit 160 may enable communication of a control instruction between the first controller 140 and the second controller 230 of the upgrade apparatus 200. That is, the upgrade apparatus connection unit 160 may have a separate connection port for transmitting and receiving the control instruction.

For example, the upgrade apparatus connection unit 160 may be provided as a USB port. Accordingly, the upgrade apparatus 200 may be connected to the USB port.

Here, the first controller 140 may include a USB host controller to set the upgrade apparatus 200 connected to the USB port to a communication state.

The display apparatus 100 may further include first and second connection units 191 and 193 respectively connected to first and second external devices P1 and P2 via a wire-based network or wirelessly to communicate with the devices.

The first and second connection units 191 and 193 may be provided as connection ports in accordance with general standards, such as HDMI, USB, component, DVI, and IEEE 1394 ports. Further, the first and second connection units 191 and 193 may be connected to the first and second external devices P1 and P2 through at least one wireless network of wireless LAN, Wi-Fi, Wibro, and long term evolution (LTE).

At least one of the first and second external devices P1 and P2 may include at least one of a storage device, such as a USB storage device, a hard disk, a flash memory, a solid state drive, a mobile device, a PDA, a smart phone, a smart pad and a notebook.

Although FIG. 2 shows two connection units, the first and second connection units 191 and 193, the number of connection units may vary as necessary.

The first controller 140 may control the first image processor 130. Further, the first controller 140 may control the entire display apparatus 100 as well as the first image processor 130.

The first controller 140 may detect whether the upgrade apparatus 200 is connected to the upgrade apparatus connection unit 160.

If it is detected that the upgrade apparatus 200 is connected to the upgrade apparatus connection unit 160, the first controller 140 sets the upgrade apparatus 200 to a communication state based on the first apparatus information stored in the first storage unit 150.

The first storage unit 150 may store unlimited data according to control by the first controller 140 in addition to the first apparatus information. The first storage unit 150 may be configured as a non-volatile memory, such as a flash memory and a hard disk drive. The first storage unit 150 is accessible by the first controller 140, and the data stored in the first storage unit 150 may be read/recorded/revised/deleted/updated by the first controller 140.

The first storage unit 150 may store, for example, an operating system to run the display apparatus 100 and various applications, image data, and optional data which are executable in the operating system.

If the upgrade apparatus connection unit 160 is provided as a USB port, the first storage unit 150 stores the first apparatus information about the upgrade apparatus 200, i.e., a USB descriptor about the upgrade apparatus 200. Here, the USB descriptor may include at least one of a device descriptor, a configuration descriptor, an interface descriptor, and an endpoint descriptor.

The device descriptor may include general information about the upgrade apparatus 200, e.g., at least one of information about a supportable USB version, distinguished information about the upgrade apparatus 200 (manufacturer information and product identification information), information about a data transfer type, and information about maximum transferable packet size.

Generally, when a USB host detects that a USB device is connected, the USB device first goes through a series of processes, called bus enumeration, and then is allowed to conduct data communication with the USB host. First, the USB device is supplied with USB power or autonomous power, which is generally referred to as a powered state.

Next, the USB device is reset and allocated a default address, which is a default state.

Subsequently, the USB device is allocated a distinguished address and allowed to keep the address, which is an address state.

Finally, a set value of the USB device is set before using a function of the USB device, which is a configuration state. Here, the USB host requests a device descriptor from the USB device. The USB device transmits the device descriptor stored therein to the USB host according to the request of the USB host. The USB host receives the device descriptor transmitted from the USB device and sets the USB device to a communication state.

That is, the USB device goes through four processes, the power state, the default state, the address state, and the configuration state.

However, when there is an exclusive USB port for connection of the upgrade apparatus 200, for example, the upgrade apparatus connection unit 160, conducting the entire processes of bus enumeration in order may cause delay of communication time.

As described above, if the first storage unit 150 of the display apparatus 100 stores the first apparatus information about the upgrade apparatus 200 to communicate with in advance, it is possible to immediately set the upgrade apparatus 200 to a communication state using the first apparatus information. More specifically, in USB communication, for example, a device descriptor that is the first apparatus information is stored in advance in the first storage unit 150, thereby omitting the default state and the address state and immediately carrying out the configuration state in the procedure of bus enumeration. Therefore, when the upgrade apparatus 200 is supplied with power and reset, then it immediately enters the configuration state. Accordingly, preparation time for data communication between the upgrade apparatus 200 and the display apparatus 200, i.e., waiting time for communication may be saved.

Here, it may be detected whether the upgrade apparatus 200 is connected to the upgrade apparatus connection unit 160 while the display apparatus 100 is started, i.e., while the display apparatus 100 is booted up. When booting the display apparatus 100, preparation time for communication between the upgrade apparatus 200 and the display apparatus 100 is reduced, thereby minimizing the boot time experienced by a user. Accordingly, the user can quickly use the display apparatus 100.

Here, even though the upgrade apparatus 200 and the display apparatus 100 are connected by a different communication mode, not by a USB mode, it is commonly employed storing information about a counterpart device, for example, the upgrade apparatus 200, necessary for a communication setting process in advance in a host device, for example, the display apparatus 100, to save communication preparation time.

The display apparatus 100 may further include a common memory (not shown) storing image signals input through the first image signal input unit 110 and/or broadcast signals or internet data received through a network connection module (not shown). The common memory may store data processed by the first image processor 130 and the first controller 140.

The first image signal input unit 110, the first image processor 130, the first controller 140, and the upgrade apparatus connection unit 160 may be provided on a single image processing board 101. However, such a configuration is merely an illustrative example, and these components may be disposed on a plurality of PCBs connected to communicate with each other. Here, the image processing board 101 may be accommodated in the casing 102.

If the upgrade apparatus 200 is not connected to the upgrade apparatus connection unit 160, the first controller 140 controls the first image processor 130 to process the image signal input through the first image signal input unit 110.

If the upgrade apparatus 200 is connected to the upgrade apparatus connection unit 160, the first controller 140 may control the first image signal input unit 110 and the first image processor 130 to transmit at least one of the input image signal and the first output signal to the upgrade apparatus 200 through the upgrade apparatus connection unit 160 so that the signal is processed by the second image processor 220.

If a second output signal processed by the upgrade apparatus 200 is received to the upgrade apparatus connection unit 160 through the body connection unit 210, the first controller 140 may control the upgrade apparatus connection unit 160 to transmit the second output signal to the display unit 170, which will be described.

If the upgrade apparatus 200 is not connected to the upgrade apparatus connection unit 160, the display unit 170 displays a first image corresponding to the first output signal output by the first image processor 130. If the upgrade apparatus 200 is connected to the upgrade apparatus connection unit 160, the display unit 170 displays a second image corresponding to the second output signal output by the second image processor 220.

The display unit 170 may be configured in various display types using liquid crystals, plasma, light emitting diodes, organic light emitting diodes, a surface conduction electron emitter, a carbon nano-tube, nano-crystals, or the like, without being limited thereto.

The display unit 170 may further include an additional element depending on a display mode thereof. For example, in a display mode using liquid crystals, the display unit 170 may include a liquid crystal display (LCD) panel, a backlight unit (not shown) providing light to the panel, and a panel drive board (not shown) driving the panel.

Further, the display apparatus 100 may further include a conversion-amplification unit 182 converting an audio signal separated by the first image processor 130 into a preset format and amplifying the signal and an audio output unit 185 outputting the amplified audio signal. Here, the audio output unit 185 may include a speaker.

Also, the display apparatus 100 may further include a user input unit 120 outputting a preset command according to manipulation by a user and the first storage unit 150 storing unlimited data/information.

The user input unit 120 transmits various preset control commands or unlimited information to the first controller 140 by user's manipulation and input. The user input unit 120 may be provided as a menu key and an input panel installed on an outside of the display apparatus 100 or as a remote controller separate from the display apparatus 100.

The user input unit 120 may be configured to communicate with the display apparatus 100 using a short-range wireless communication method, such as Bluetooth or infrared communication. In this case, the user input unit 120 may include a wireless keyboard, a wireless mouse, a remote controller, or the like.

As necessary, the user input unit 120 may be configured as a single body with the display unit 170. That is, if the display unit 170 is a touch screen, a user may transmit a preset command to the first controller 140 through an input menu (not shown) displayed on the display unit 170.

The first controller 140 performs control operations over various components of the display apparatus 100. For example, the first controller 140 conducts image processing carried out by the first image processor 130, transmission/reception operations of signals/information/data through the first image signal input unit 110, and a control operation corresponding to a command from the user input unit 120, thereby controlling the overall operations of the display apparatus 100.

If a new upgrade apparatus is connected to the upgrade apparatus connection unit 160, the first controller 140 may store second apparatus information about the new upgrade apparatus in the first storage unit 150. When it is determined that the new upgrade apparatus is connected when the apparatus information transmitted from the new upgrade apparatus is different from the first apparatus information stored in the first storage unit 150.

If it is detected that the new upgrade apparatus is connected to the upgrade apparatus connection unit 160, the first controller 140 sets the new upgrade apparatus to a communication state based on the second apparatus information stored in the first storage unit 150. Accordingly, preparation time for communication between the new upgrade apparatus and the display apparatus 100 may be saved.

The upgrade apparatus 200 may be connected to the display apparatus 100 via a wire-based network or wirelessly. In the present embodiment, the upgrade apparatus 200 and the display apparatus 100 may be connected to each other via a wire-based network to transmit and receive data/information/signals/power. As described above, the upgrade apparatus 200 includes the body connection unit 210 to transmit/receive power and data to/from the display apparatus 100. The display apparatus 100 includes the upgrade apparatus connection unit 160 to transmit/receive power and data to/from the upgrade apparatus 200. That is, the upgrade apparatus 200 may receive power needed for driving from the display apparatus 100 through the body connection unit 210. For example, if the upgrade apparatus connection unit 160 is a USB port, the upgrade apparatus 200 may be provided with USB power.

As necessary, the upgrade apparatus 200 may further include a power conversion unit (not shown) to convert power input from the display apparatus 100 into power needed for driving. Here, if the display apparatus 100 entirely converts and transmits power required by the upgrade apparatus 200, the power conversion unit may be omitted.

As necessary, the upgrade apparatus 200 may be supplied with driving power needed to operate not directly from the display apparatus 100 through the body connection unit 210 but from a separate external power source (commercial power source or battery).

Also, unlike in FIG. 1, the upgrade apparatus 200 may be connected to the display apparatus 100 wirelessly if necessary. In this case, the upgrade apparatus 200 may be supplied with operation power from a separate external power source or battery, not from the display apparatus 100.

Before the upgrade apparatus 200 is connected to the display apparatus 100, the display apparatus 100 autonomously processes an image signal received from the outside according to a preset image processing procedure and displays an image based on the signal. However, if the upgrade apparatus 200 is connected to the display apparatus 100, hardware/software of the display system 1 performing the above image processing procedure is upgraded. Accordingly, new functions or upgraded functions may be provided to a user due to the upgrade apparatus 200. For example, as the upgrade apparatus 200 is connected, a higher quality of images may be realized than the quality of image that is realized when using the display apparatus 100 alone.

As described above, the upgrade apparatus 200 includes the body connection unit 210 connected to the display apparatus 100, the second image processor 220 receiving and processing a signal output from the display apparatus 100 through the body connection unit 210, and the second controller 230 controlling the second image processor 220.

Here, if the second image processor 220 is configured to be controlled only by the first controller 140 of the display apparatus 100, the second controller 230 may be omitted as necessary.

The second image processor 220 processes any one of the input signal of the first image signal input unit 110 output from the display apparatus 100 and a first output signal output from the first image processor 130 and outputs the signal as a second output signal.

The second output signal output by the second image processor 220 is transmitted to the display unit 170 through the body connection unit 210 and the upgrade apparatus connection unit 160. Accordingly, a second image corresponding to the second output signal may be displayed on the display unit 170. Since the second image processor 220 additionally performs an updated function from that of the first image processor 130 or a function which cannot be conducted by the first image processor 130, an upgraded image which is not realized by the display apparatus 100 or is hard for the display apparatus 100 to realize is displayed on the display unit 170.

For example, a full HD image is not provided by the first image processor 130 but may be provided by the second image processor 220. Further, a 3D image is not realized by the first image processor 130 but may be presented through the second image processor 220. Such added and expanded functions are only illustrative examples and may be changed variously.

Here, the second image processor 220 may reprocess the audio signal as well as the image signal, and accordingly the reprocessed and upgraded audio signal may be provided to the display apparatus 100.

As described above, the image signal is received or input through the first image signal input unit 110 of the display apparatus 100. However, the upgrade apparatus 200 may include a second image signal input unit 250 to receive an image signal from an external image source separately from the display apparatus 100 if needed. In this case, if it is detected that the upgrade apparatus 200 is connected to the upgrade apparatus connection unit 160, the first controller 140 of the display apparatus 100 may stop operations of the first image signal input unit 110 and the first image processor 130. Here, an input signal (broadcast signal or image signal) input through the second image signal input unit 250 is transmitted to the second image processor 220 and processed, and a second output signal output by the second image processor 220 may be transmitted to the display unit 170 through the upgrade apparatus connection unit 160 and the first image processor 130 of the display apparatus 100. Accordingly, a second image corresponding to the second output signal may be displayed on the display unit 170.

Alternatively, if the upgrade apparatus 200 independently receives an image signal (broadcast signal) through the second image signal input unit 250, the first controller 140 may control the first image processor 130 to process a signal input through the first image signal input unit 110 and output a first output signal to the display unit 170. Here, a first image corresponding to the first output signal may be displayed as a main screen or sub-screen on the display unit 170. At the same time, if receiving the broadcast signal or image signal through the second image signal input unit 250, the upgrade apparatus 200 processes the signal in the second image processor 220 and transmits a second output signal to the display unit 170. Accordingly, a second image corresponding to the second output signal may be displayed on the display unit 170 as a sub-screen or main screen corresponding to the first image. That is, the first input signal (broadcast signal and/or image signal) input through the first image signal input unit 110 of the display apparatus 100 and the second input signal input through the second image signal input unit 250 of the upgrade apparatus 200 are processed into the first image and the second image, respectively, and the images may be displayed in picture in picture (PIP).

If it is detected that the upgrade apparatus 200 is connected, the first controller 140 of the display apparatus 100 may control the first image processor 130 and the first image signal input unit 110 in cooperation with the second controller 230 of the upgrade apparatus 200. For example, the first controller 140 may be responsible for controlling part of the demultiplexer (not shown), the decoder (not shown) and the scaler (not shown), and the second controller 230 may be responsible for controlling the remaining thereof.

If necessary, the first controller 140 may have priority to control the first image signal input unit 110 and the first image processor 130, and the second controller 230 may assist the first controller 140.

On the contrary, the second controller 230 may have priority to control the first image signal input unit 110 and the first image processor 130, and the first controller 140 may assist the second controller 230.

Meanwhile, if it is detected that the upgrade apparatus 200 is connected, the first controller 140 of the display apparatus 100 may entirely transfer the control function of the first controller 140 to the second controller 230. Here, the first controller 140 may serve to just deliver a control instruction between components previously controlled by the first controller 140 and the second controller 230 but not give the control instruction. If necessary, an exclusive control communication line may be separately provided to transmit and receive a control instruction between the second controller 230 and the component previously controlled by the first controller 140.

The upgrade apparatus 200 may further include a second storage unit 240.

The second storage unit 240 may store as much data as needed.

The second storage unit 240 may be configured as a non-volatile memory, such as a flash memory and a hard disk drive. The second storage unit 240 is accessed by the first controller 140 or the second controller 230, and data stored in the storage unit 240 is read/recorded/revised/deleted/updated by the controllers 140 or 230. Meanwhile, the first storage unit 150 may also be accessed by not only the first controller 140 but the second controller 230 depending on a configuration thereof.

Further, the second storage unit 240 may store an updated operating system more advanced than the operating system stored in the first storage unit 150. The first controller 140 or the second controller 230 may update the operating system stored in the first storage unit 150 to the updated operating system and drive the updated operating system. As necessary, the operating system of the second storage unit 240 may be driven instead of the operating system stored in the first storage unit 150.

Here, as described above, the first apparatus information (or second apparatus information) about the upgrade apparatus 200 is stored in the display apparatus 100 and used to save preparation time for communication. That is, the display apparatus 100 serves as a USB host, and the upgrade apparatus 200 serves as a USB device.

However, the display apparatus 100 may serve as a USB device and the upgrade apparatus 200 may serve as a USB host if necessary, which is described as follows.

Third apparatus information about the display apparatus 100 may be stored in the second storage unit 240 of the upgrade apparatus 200.

If it is detected that the body connection unit 210 is connected to the display apparatus 100, particularly the upgrade apparatus connection unit 160, the second controller 230 may set the display apparatus 100 to a communication state based on the third apparatus information stored in the second storage unit 240. Accordingly, preparation time for communication between the display apparatus 100 and the upgrade apparatus 200 may be saved. For example, if the upgrade apparatus connection unit 160 is provided as a USB port, the second controller 230 may include a USB host controller (not shown) controlling the USB port to communicate.

The third apparatus information may include a USB descriptor about the display apparatus 100. Here, the USB descriptor may include at least one of a device descriptor, a configuration descriptor, an interface descriptor, and an endpoint descriptor.

The device descriptor may include general information about the display apparatus 100, e.g., at least one of information about a supportable USB version, distinguishing information about the display apparatus 100 (manufacturer information and product identification information), information about a data transfer type, and information about maximum transferable packet size.

If a new display apparatus is connected to the body connection unit 210, the second controller 230 stores fourth apparatus information about the new display apparatus in the second storage unit 240. Here, as to connection of the new display apparatus, it is determined that the new display apparatus is connected when the fourth apparatus information requested and transmitted from the new display apparatus is different from the third apparatus information stored in the second storage unit 240.

If it is detected that the new display apparatus is connected to the body connection unit 210, the second controller 230 sets the new display apparatus to a communication state based on the fourth apparatus information stored in the second storage unit 240. Accordingly, preparation time for communication between the new display apparatus 100 and the upgrade apparatus 200 may be saved.

Although the aforementioned embodiment has been described to save preparation time form communication between the display apparatus 100 and the upgrade apparatus 200, it may be applied to reduce preparation time for communication between other electronic devices as well.

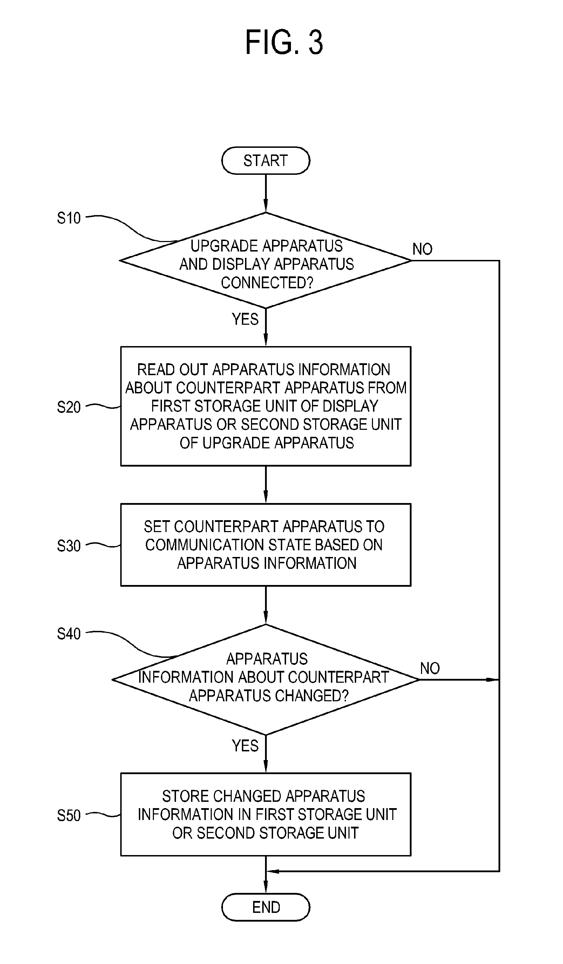

Hereinafter, a control method of the display system will be described with reference to FIGs. 2 and 3.

First, it is detected whether the upgrade apparatus 200 and the display apparatus 100 are connected to each other (S10).

If connection is detected (yes in S10), the first storage unit 150 of the display apparatus 100 or the second storage unit 240 of the upgrade apparatus 200 reads out apparatus information about the counterpart apparatus (S20).

One apparatus of the upgrade apparatus or the display apparatus sets the other counterpart apparatus to a communication state based on the read apparatus information (S30). Accordingly, preparation time for communication between the display apparatus 100 and the upgrade apparatus 200 may be saved.

If the apparatus information about the counterpart apparatus is changed (yes in S40), the changed apparatus information is stored in the first storage unit 150 or the second storage unit 240 (S50). In detail, if the apparatus information about the display apparatus 100 is changed, the changed apparatus information is stored in the second storage unit 240 of the upgrade apparatus 200. On the contrary, if the apparatus information about the upgrade apparatus 200 is changed, the changed apparatus information is stored in the first storage unit 150 of the display apparatus 100.

Although a few exemplary embodiments have been shown and described, it will be appreciated by those skilled in the art that changes may be made in these exemplary embodiments without departing from the principles of the inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a first image processor which processes an input image signal and outputs a first output signal;
an apparatus connector which is connectable to an apparatus comprising a second image processor;
a display which displays at least one of a first image corresponding to the first output signal and a second image corresponding to a second output signal output by the second image processor;
a first storage which stores first apparatus information about the apparatus; and
a first controller which sets the apparatus to a communication state based on the first apparatus information stored in the first storage if the apparatus is connected to the apparatus connector.

2. The display apparatus of claim 1, wherein the first controller stores second apparatus information about a new apparatus in the first storage if the new apparatus is connected to the apparatus connector.

3. The display apparatus of claim 2, wherein the first controller sets the new apparatus to a communication state based on the second apparatus information stored in the first storage if the new apparatus is connected to the apparatus connector.

4. The display apparatus of claim 1, wherein the first apparatus information comprises at least one of information about a data transfer type of the apparatus, information about a version of the apparatus, and information about a maximum packet size.

5. The display apparatus of claim 1, wherein the apparatus connector comprises a USB port, and the first controller comprises a USB host controller which controls communications of the USB port.

6. An apparatus configured to connect to a display apparatus, the apparatus comprising:
a body connector which is configured to connect to a display apparatus including a first image processor and a first controller;
a second image processor which receives and processes a signal output from the display apparatus through the body connector;
a second storage which stores third apparatus information about the display apparatus therein; and
a second controller which sets the display apparatus to a communication state based on the third apparatus information stored in the second storage if the display apparatus is connected to the body connector.

7. The apparatus of claim 6, wherein the second controller stores fourth apparatus information about a new display apparatus in the second storage if the new display apparatus is connected to the body connector.

8. The apparatus of claim 7, wherein the second controller sets the new display apparatus to a communication state based on the fourth apparatus information stored in the second storage if the new display apparatus is connected to the body connector.

9. The apparatus of claim 6, wherein the third apparatus information comprises at least one of information about a data transfer type of the display apparatus, information about a version of the display apparatus, and information about a maximum packet size.

10. The apparatus of claim 6, wherein the body connector comprises a USB port, and the second controller comprises a USB host controller which controls communications of the USB port.

11. A display system comprising:
a display apparatus comprising a first image processor which processes a first input image signal and outputs a first output signal, an apparatus connector, a display which displays a first image corresponding to the first output signal, a first storage , and a first controller; and
an apparatus comprising a body connector which is connected to the apparatus connector, a second image processor which receives and processes a second input image signal, a second storage , and a second controller,
wherein at least one of the first storage and the second storage storing apparatus information about at least one of the connected display apparatus and the apparatus, and
wherein at least one of the first controller and the second controller set the at least one of the connected display apparatus and the apparatus to a communication state based on the apparatus information stored in at least one of the first storage and the second storage .

12. The display system of claim 11, wherein at least one of the apparatus connector and the body connector comprises a USB port, and at least one of the first controller and the second controller comprises a USB host controller which controls communications of the USB port.

13. A control method of a display system comprising a display apparatus and an apparatus connected to the display apparatus, the method comprising:
detecting that the apparatus and the display apparatus are connected to each other;
reading out apparatus information about at least one of the apparatus and the display apparatus from a first storage of the display apparatus or a second storage of the apparatus; and
setting the at least one of the apparatus and the display apparatus to a communication state based on the apparatus information.

14. The control method of claim 13, further comprising:
storing changed apparatus information in the first storage or the second storage if the apparatus information about the at least one of the apparatus and the display apparatus is changed.

15. A display apparatus comprising:
an apparatus connector which is configured to connect to an apparatus comprising a second image processor;
a first storage which stores first apparatus information about the upgrade apparatus; and
a first controller which sets the apparatus to a communication state based on the first apparatus information stored in the first storage if the apparatus is connected to the apparatus connector.

16. The display apparatus of claim 15, further comprising:
a display which displays at least one of a first image corresponding to a first output signal output by a first image processor and a second image corresponding to a second output signal output by the second image processor;
